# FASCICULE DE BREVET EUROPEEN

(11) **EP 3 894 662 B1**
(45) Date de publication et mention de la délivrance du brevet: **25.01.2023**
(21) Numéro de dépôt: 19839376.1
(22) Date de dépôt: 10.12.2019
(51) Int. Cl.: F01D 5/14

(54) **AUBE DE TURBOMACHINE À LOI D'ÉPAISSEUR MAXIMALE À FORTE MARGE AU FLOTTEMENT**
TURBOMASCHINENSCHAUFEL MIT MAXIMALEM DICKENGESETZ MIT HOHEM FLATTERRAND
TURBOMACHINE BLADE HAVING A MAXIMUM THICKNESS LAW WITH HIGH FLUTTER MARGIN

(30) Priorité: 11.12.2018 FR 1872701
(43) Date de publication de la demande: 20.10.2021
(73) Titulaire: SAFRAN AIRCRAFT ENGINES, 75015 Paris (FR)
(72) Inventeur: DIEUDONNE, Sadim, 77550 MOISSY-CRAMAYEL (FR); CAVAREC, Mickaël, 77550 MOISSY-CRAMAYEL (FR); GONDRE, Guillaume, Pascal, Jean-Charles, 77550 MOISSY-CRAMAYEL (FR); DE CACQUERAY-VALMENIER, Nicolas Pierre Alain Edme, 77550 MOISSY-CRAMAYEL (FR)
(74) Mandataire: Regimbeau
(86) Numéro de dépôt international: PCT/FR2019/053006
(87) Numéro de publication internationale: WO 2020/120898

(56) Documents cités:
- EP-A1- 0 112 003
- EP-A2- 1 754 859
- EP-A2- 2 562 427
- EP-B1- 0 112 003
- FR-A1- 2 989 415

## Description

### DOMAINE TECHNIQUE GÉNÉRAL ET ART ANTÉRIEUR

L'invention concerne le domaine des aubes de turbomachine et plus particulièrement celui des aubes de rotor de turbomachine.

L'invention vise notamment à être utilisée dans des soufflantes au sein d'un turboréacteur ou d'une turbomachine.

Une turbomachine comprend au moins un aubage, comme par exemple une soufflante, qui comporte une pluralité d'aubes arrangées radialement autour d'un axe central, par exemple autour d'un disque.

Un tel aubage forme soit un rotor, quand il s'agit d'un aubage mobile ou d'un disque aubagé, soit un stator.

Les aubes peuvent être considérées comme des excroissances par rapport à un anneau continu. Deux aubes voisines et l'anneau définissent un couloir d'écoulement d'air.

L'extrémité proximale de chaque aube par rapport à l'axe central est habituellement dénommée pied d'aube. En particulier, le pied d'aube est considéré ici comme la partie de l'aube située au-dessus de l'anneau.

L'extrémité distale est habituellement dénommée tête d'aube. La distance entre le pied et la tête d'aube est connue comme hauteur d'aube.

Entre le pied et la tête d'aube, l'aube peut être représentée de façon théorique par un empilement de sections ou profils aérodynamiques perpendiculaires à un axe radial Z.

L'aube est une pièce complexe à élaborer car elle est impliquée à la fois dans des aspects aérodynamiques, mécaniques et acoustiques de l'aubage et de la turbomachine.

La conception de l'aube et de l'aubage nécessite de travailler simultanément sur les performances aérodynamiques, la tenue mécanique et la réduction des masses, bruit et coût.

La conception doit garantir une durée de vie minimum de l'aube et du disque sur lequel sont fixées les aubes.

La conception doit garantir une tenue vibratoire minimum de l'aubage c'est-à-dire une résistance suffisante aux vibrations, ou un niveau de vibration acceptable pour assurer la tenue mécanique.

L'aubage doit présenter une tenue à l'ingestion de corps étrangers et une tenue à la perte d'aube c'est-à-dire une résistance de l'aubage aux situations où une aube se détache partiellement ou entièrement du disque.

Le phénomène de flottement doit être pris en compte durant la conception de l'aube et de l'aubage.

Le flottement est un couplage aéromécanique dû au mouvement relatif de l'air par rapport à la structure des aubes et de l'aubage. Le flottement est un phénomène auto-entretenu, la modification du mouvement de la structure solide modifiant l'écoulement du fluide et la modification de l'écoulement du fluide générant des forces sur la structure solide. Le flottement peut rapidement s'amplifier et aboutir à la rupture d'une aube de la soufflante, voire un endommagement du moteur.

Le flottement est fortement lié au dessin de la structure, de sorte qu'il est difficile d'éliminer ou même de limiter un phénomène de flottement une fois qu'il a été détecté dans le fonctionnement d'une soufflante.

Il reste alors la possibilité d'interdire certaines zones de fonctionnement pour limiter les risques liés au flottement, mais cela réduit nécessairement les conditions de vol dans lesquelles la soufflante peut fonctionner.

Le document FR 2 989 415 A1 propose une aube de turbine axiale dans laquelle le rapport de l'épaisseur maximale de l'aube sur sa corde dans un segment adjacent à un pied ou une tête d'aube est supérieur à tout rapport de l'épaisseur maximale de l'aube sur sa corde dans un segment intermédiaire non adjacent au pied ou la tête d'aube.

Le document EP 0 112 003 A1 propose une géométrie d'aube de soufflante définie par une loi de corde et d'épaisseur de l'aube en fonction de la hauteur d'aube.

Le document EP 1 754 859 A2 propose un procédé de fabrication d'une aube dans laquelle le rapport de l'épaisseur maximale de l'aube sur sa corde en pied d'aube et en tête d'aube est supérieur à un rapport de l'épaisseur maximale de l'aube sur sa corde dans un segment intermédiaire non adjacent au pied ou la tête d'aube.

Il existe donc un besoin pour une aube et un aubage pour lesquelles la zone de fonctionnement où apparaît le flottement est la plus éloignée possible de la zone de fonctionnement nominale, c'est-à-dire une aube et un aubage qui présente une marge au flottement la plus importante possible.

### PRÉSENTATION GÉNÉRALE DE L'INVENTION

Un but général de l'invention est de pallier les inconvénients des aubes et des soufflantes de l'art antérieur.

Notamment, un but de l'invention est de proposer une solution pour augmenter la marge au flottement.

Un autre but encore est de proposer une solution pour augmenter la marge au flottement et une aube dont le comportement mécanique de l'aube ou les performances aérodynamiques ne sont pas dégradés.

Le but est atteint dans le cadre de la présente invention grâce à une aube de rotor de turbomachine comprenant une pluralité de sections d'aube empilées selon un axe Z entre un pied d'aube et une tête d'aube définissant entre eux la hauteur de l'aube, chaque section d'aube comportant un bord d'attaque, un bord de fuite, un intrados et un extrados, une corde définie par la longueur de la portion de droite reliant le bord d'attaque et le bord de fuite dans la section et une épaisseur maximale définie par la distance maximale entre l'extrados et l'intrados caractérisée en ce que :
- le rapport entre l'épaisseur maximale et la corde à 30% de hauteur de l'aube est compris entre 20% et 42% du rapport entre l'épaisseur maximale et la corde en pied d'aube,
- le rapport entre l'épaisseur maximale et la corde à 70% de hauteur de l'aube est compris entre 10% et 30% du rapport entre l'épaisseur maximale et la corde en pied d'aube,
- le rapport entre l'épaisseur maximale et la corde à 90% de hauteur de l'aube est compris entre 10% et 30% du rapport entre l'épaisseur maximale et la corde en pied d'aube,
- le rapport entre l'épaisseur maximale et la corde en tête d'aube est compris entre 3% et 21% du rapport entre l'épaisseur maximale et la corde en pied d'aube

Une telle aube est avantageusement complétée par les différentes caractéristiques suivantes prises seules ou en combinaison
- le rapport entre l'épaisseur maximale et la corde d'une section de l'aube est compris entre :
   ∘ Une première fonction affine par morceaux définie par
      ▪ un premier segment de droite défini par un rapport entre l'épaisseur maximale et la corde en pied d'aube égal à 12%, et un rapport entre l'épaisseur maximale et la corde à 30% de hauteur de l'aube égal à 3%,
      ▪ un deuxième segment de droite défini par un rapport entre l'épaisseur maximale et la corde à 30% de hauteur de l'aube égal à 3%, et un rapport entre l'épaisseur maximale et la corde à 70% de hauteur de l'aube égal à 1,5%,
      ▪ un troisième segment de droite défini par un rapport entre l'épaisseur maximale et la corde à 70% de hauteur de l'aube égal à 1,5%, et un rapport entre l'épaisseur maximale et la corde à 90% de hauteur de l'aube égal à 1,5%,
      ▪ un quatrième segment de droite défini par un rapport entre l'épaisseur maximale et la corde à 90% de hauteur de l'aube égal à 1,5%, et un rapport entre l'épaisseur maximale et la corde en tête d'aube égal à 0,5%, et
   ∘ une deuxième fonction affine par morceaux définie par
      ▪ un cinquième segment de droite défini par un rapport entre l'épaisseur maximale et la corde en pied d'aube égal à 14%, et un rapport entre l'épaisseur maximale et la corde à 30% de hauteur de l'aube égal à 5%,
      ▪ un sixième segment de droite défini par un rapport entre l'épaisseur maximale et la corde à 30% de hauteur de l'aube égal à 5%, et un rapport entre l'épaisseur maximale et la corde à 70% de hauteur de l'aube égal à 3,5%,
      ▪ un septième segment de droite défini par un rapport entre l'épaisseur maximale et la corde à 70% de hauteur de l'aube égal à 3,5%, et un rapport entre l'épaisseur maximale et la corde à 90% de hauteur de l'aube égal à 3,5%, et
      ▪ un huitième segment de droite défini par un rapport entre l'épaisseur maximale et la corde à 90% de hauteur de l'aube égal à 3,5%, et un rapport entre l'épaisseur maximale et la corde en tête d'aube égal à 2,5%.
- le rapport entre l'épaisseur maximale et la corde varie en fonction de sa hauteur selon une fonction affine par morceaux du pied à 30% de la hauteur de l'aube, de 30% à 70% de la hauteur de l'aube, de 70% à 90% de hauteur de l'aube, et de 90% de hauteur de l'aube de la hauteur de l'aube à la tête d'aube.
- le rapport entre l'épaisseur maximale et la corde d'une section de l'aube diminue ou reste constant lorsque la hauteur de la section augmente.
- le rapport entre l'épaisseur maximale et la corde à 30% de hauteur de l'aube est compris entre 26% et 36%, de préférence de l'ordre de 30,8% du rapport entre l'épaisseur maximale et la corde en pied d'aube.
- le rapport entre l'épaisseur maximale et la corde à 70% de hauteur de l'aube est compris entre 14% et 24%, de préférence de l'ordre de 19,2% rapport entre l'épaisseur maximale et la corde en pied d'aube
- le rapport entre l'épaisseur maximale et la corde à 90% de hauteur de l'aube est compris entre 14% et 24%, de préférence de l'ordre de 19,2% du rapport entre l'épaisseur maximale et la corde en pied d'aube
- le rapport entre l'épaisseur maximale et la corde en tête d'aube est compris entre 6,5% et 16,5%, de préférence de l'ordre de 11,5% du rapport entre l'épaisseur maximale et la corde en pied d'aube
- le rapport entre l'épaisseur maximale et la corde en pied d'aube est compris entre 8% et 18%, de préférence de l'ordre de 13%.
   - L'invention concerne également une soufflante de turbomachine comportant une pluralité d'aubes de rotor telles que décrites plus haut.
   - L'invention concerne également une turbomachine qui comprend une telle soufflante.

### PRÉSENTATION DES FIGURES

D'autres caractéristiques et avantages de l'invention ressortiront encore de la description qui suit, laquelle est purement illustrative et non limitative, et doit être lue en regard des dessins annexés sur lesquels :
La figure 1 est une coupe longitudinale schématique d'une turbomachine ;
La figure 2 est une vue schématique en perspective d'un rotor de soufflante de turbomachine ;
La figure 3 est une vue schématique en perspective d'un détail du rotor de la figure 2 ;
La figure 4 représente de manière schématique une section d'une aube
La figure 5 un diagramme illustrant l'évolution, entre le pied et la tête d'aube, du rapport de l'épaisseur maximale sur la corde de l'aube selon l'invention ;
La figure 6 représente de manière schématique des lignes de fonctionnement d'une soufflante conforme à un mode de réalisation de l'invention et d'une soufflante selon l'art antérieur.

### DESCRIPTION D'UN OU PLUSIEURS MODES DE MISE EN OEUVRE ET DE RÉALISATION

### Turbomachine - Présentation générale

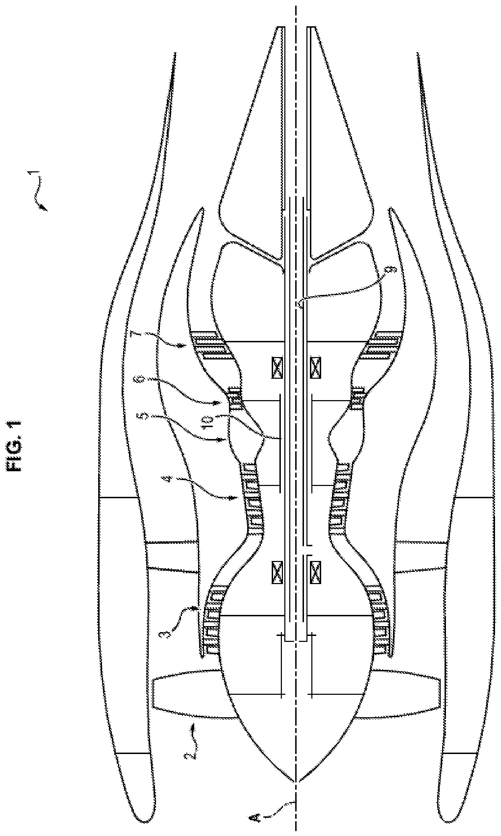

En référence à la figure 1 une turbomachine est représentée de manière schématique, plus spécifiquement un turboréacteur axial 1 à double flux. Le turboréacteur 1 illustré comporte une soufflante 2, un compresseur basse pression 3, un compresseur haute pression 4, une chambre de combustion 5, une turbine haute pression 6, et une turbine basse pression 7.

La soufflante 2 et le compresseur basse pression 3 sont reliés à la turbine basse pression 7 par un premier arbre de transmission 9, tandis que le compresseur haute pression 4 et la turbine haute pression 6 sont reliés par un deuxième arbre de transmission 10.

En fonctionnement, un écoulement d'air comprimé par les compresseurs basse et haute pression 3 et 4 alimente une combustion dans la chambre de combustion 5, dont l'expansion des gaz de combustion entraîne les turbines haute et basse pression 6, 7. A travers les arbres 9 et 10, les turbines 6, 7 actionnent ainsi la soufflante 2 et les compresseurs 3, 4. L'air propulsé par la soufflante 2 et les gaz de combustion sortant du turboréacteur 1 à travers une tuyère propulsive (non illustrée) en aval des turbines 6, 7 exercent une poussée de réaction sur le turboréacteur 1 et, à travers lui, sur un véhicule ou engin tel qu'un aéroplane (non illustré).

Chaque compresseur 3, 4 et chaque turbine 6, 7 du turboréacteur 1 comportent plusieurs étages, chaque étage étant formé par un aubage fixe ou stator, et un aubage tournant ou rotor.

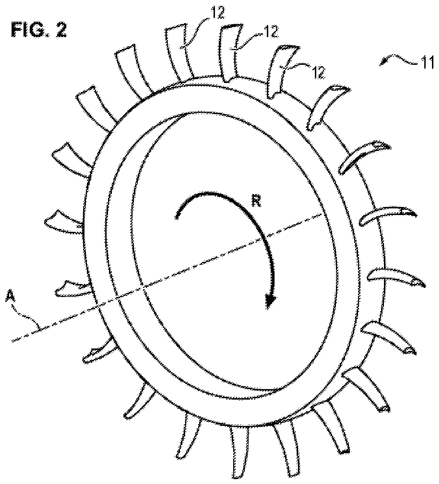

En référence à la figure 2, un rotor 11 de soufflante de turbomachine est illustré schématiquement. Ce rotor 11 comporte une pluralité d'aubes 12 arrangées radialement autour de l'axe de rotation A du rotor 11, qui est sensiblement parallèle à la direction générale d'écoulement du fluide de travail à travers le turboréacteur 1.

Les aubes 12 peuvent constituer des pièces distinctes du reste du rotor et être rapportées sur celui-ci par des moyens de fixation généralement connus dans l'état de la technique, tels que des attaches brochées ou des fixations en pied de sapin.

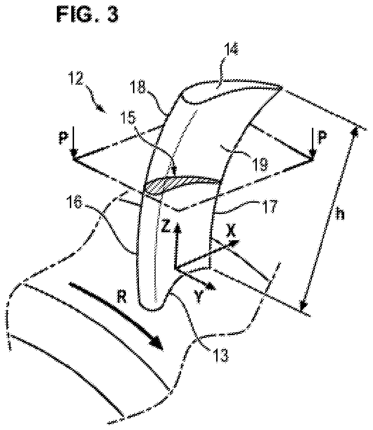

En référence à la figure 3, une vue schématique en perspective d'un détail du rotor de la figure 2 est proposée. Chaque aube 12 présente un système de référence spatial avec trois axes orthogonaux X, Y et Z.

L'axe X est parallèle à l'axe de rotation A du rotor 11, l'axe Y est tangentiel à la direction de rotation R de l'aube 12 autour de l'axe de rotation A, et l'axe Z est un axe radial suivant une direction traversant l'axe de rotation A.

Chaque aube 12 comporte un pied d'aube 13 et une tête d'aube 14 séparés par une hauteur d'aube h suivant la direction de l'axe radial Z.

Entre le pied d'aube 13 et la tête d'aube 14, l'aube 12 peut être représentée de façon théorique par un empilement de sections ou profils aérodynamiques 15 dans des plans perpendiculaires à l'axe radial Z.

L'aube de rotor de turbomachine peut être décrit comme comportant une pluralité de sections d'aube empilées selon un axe Z entre le pied d'aube et la tête d'aube définissant entre eux la hauteur de l'aube h.

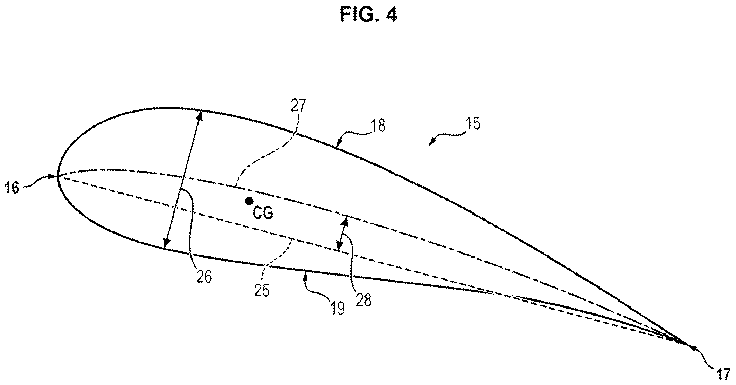

Un tel plan P est représenté sur les figures 3 et 4.

L'aube 12 comporte un bord d'attaque 16 en direction amont, un bord de fuite 17 en direction aval, un extrados 18 et un intrados 19.

Chaque section d'aube peut être décrite comme comportant un bord d'attaque et un bord de fuite.

Dans un rotor de compresseur ou de soufflante, le sens de rotation R en fonctionnement normal est tel que chaque aube 12 se déplace en direction de son intrados 19.

Une section d'aube 15 est représentée de manière schématique sur la figure 4 avec une ligne de corde 25 et une ligne de cambrure 27.

La ligne de corde 25 est une portion de droite reliant le bord d'attaque 16 et le bord de fuite 17 dans cette section 15.

Dans le présent texte, le terme « corde » seul est utilisé pour désigner la distance entre ces deux points les plus éloignés.

La ligne de cambrure 27 est une courbe égale à la moyenne entre la courbe de l'extrados 18 et la courbe de l'intrados 19 dans ladite section 15. Plus précisément, la ligne de cambrure est formée de tous les points situés à égale distance de l'extrados 18 et de l'intrados 19. La distance d'un point particulier à l'extrados (ou à l'intrados) est définie ici comme la distance minimale entre le point particulier et un point de l'extrados (ou de l'intrados).

On a également représenté par des doubles flèches sur cette figure 4 :
- l'épaisseur maximale 26 de la section (distance maximale entre l'extrados 18 et l'intrados 19) dans une direction perpendiculaire à la ligne de corde,
- la distance maximale ou flèche max 28 entre la corde 25 et la ligne de cambrure 27 ; la flèche max correspond à la longueur maximale d'un segment perpendiculaire à la ligne de corde et reliant un point de la ligne de corde et un point de la ligne de cambrure ;
- le centre de gravité CG de la section d'aube, qui est le barycentre des masses de la section d'aube. La position du centre de gravité est définie dans le plan de la section par rapport à l'axe Z, c'est-à-dire par des coordonnées selon les axes X et Y dans ladite section.

### Lois d'épaisseur maximale

Une loi d'épaisseur maximale sur corde ou loi d'épaisseur maximale est définie ici comme une ou plusieurs conditions portant sur la valeur du rapport entre l'épaisseur maximale et la corde d'une section d'aube en fonction de la hauteur de la section d'aube. Les épaisseurs maximales des aubes varient en fonction de la hauteur de la section qui leur correspond dans la hauteur de l'aube. La hauteur de la section est exprimée comme un pourcentage entre 0% correspondant à une référence en pied d'aube et 100% correspondant à la tête d'aube. L'expression « à 30% de hauteur de l'aube » désigne dans ce document une section d'aube qui se situe à une hauteur de 30%.

Il a été constaté par les inventeurs que des lois d'épaisseur maximale spécifiques permettaient de bien meilleures marges au flottement.

C'est le cas notamment lorsque les relations suivantes sont respectées :
- le rapport entre l'épaisseur maximale et la corde à 30% de hauteur de l'aube est compris entre 20% et 42% du rapport entre l'épaisseur maximale et la corde en pied d'aube,
- le rapport entre l' épaisseur maximale et la corde à 70% de hauteur de l'aube est compris entre 10% et 30% du rapport entre l'épaisseur maximale et la corde en pied d'aube,
- le rapport entre l'épaisseur maximale et la corde à 90% de hauteur de l'aube est compris entre 10% et 30% du rapport entre l'épaisseur maximale et la corde en pied d'aube,
- le rapport entre l'épaisseur maximale et la corde en tête d'aube est compris entre 3% et 21% du rapport entre l'épaisseur maximale et la corde en pied d'aube.

De meilleurs marges sont encore obtenues si le rapport entre l'épaisseur maximale et la corde à 30% de hauteur de l'aube est compris entre 26% et 36%, du rapport entre l'épaisseur maximale et la corde en pied d'aube, et vaut de préférence de l'ordre de 30,8%.

Il est précisé que dans ce document un rapport Ra (qui s'exprime en pourcents) est considéré de l'ordre d'un certain pourcentage Pa lorsque le rapport Ra vérifie -1% ≤(Ra-Pa)≤+1%. Par exemple Ra est de l'ordre de 10% si Ra est compris entre 9% et 11%.

Egalement, le rapport entre l'épaisseur maximale et la corde à 70% de hauteur de l'aube peut être compris entre 14% et 24% du rapport entre l'épaisseur maximale et la corde en pied d'aube, et vaut de préférence de l'ordre de 19%.

Le rapport entre l'épaisseur maximale et la corde à 90% de hauteur de l'aube peut être compris entre 14% et 24% du rapport entre l'épaisseur maximale et la corde en pied d'aube, et vaut de préférence de l'ordre de 19%.

Le rapport entre l'épaisseur maximale et la corde en tête d'aube peut être compris entre 9% et 14% du rapport entre l'épaisseur maximale et la corde en pied d'aube, et vaut de préférence de l'ordre de 11,5%.

Le rapport entre l'épaisseur maximale et la corde est défini avec les valeurs :
- r pour un pourcentage de hauteur de 0%,
- s pour un pourcentage de hauteur de 30%,
- t pour un pourcentage de hauteur de 70%,
- u pour un pourcentage de hauteur de 90%, et
- v pour un pourcentage de hauteur de 100%.

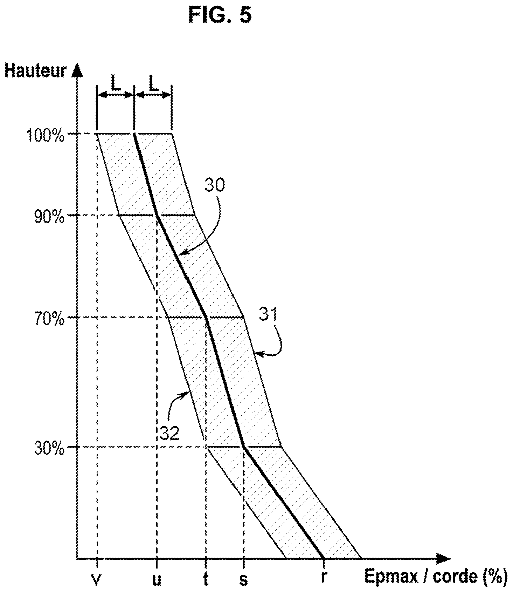

Une loi d'épaisseur maximale est illustrée sur le graphe de la figure 5, sur lequel la valeur du rapport entre l'épaisseur maximale et la corde est donnée en abscisse, tandis que la hauteur de la section d'aube est fournie en ordonnée.

Sur la figure 5, la loi d'épaisseur maximale de l'aube est représentée par la courbe 30 en trait gras continu sur ce graphe.

La courbe 30 correspond à des variations du rapport entre l'épaisseur maximale et la corde qui suivent une fonction affine par morceaux :
- du rapport entre l'épaisseur maximale et la corde r au pourcentage de hauteur 0% vers le rapport entre l'épaisseur maximale et la corde s au pourcentage de hauteur 30%,
- du rapport entre l'épaisseur maximale et la corde s au pourcentage de hauteur 30% vers le rapport entre l'épaisseur maximale et la corde t au pourcentage de hauteur 70%,
- du rapport entre l'épaisseur maximale et la corde t au pourcentage de hauteur 70% vers le rapport entre l'épaisseur maximale et la corde u au pourcentage de hauteur 90%,
- du rapport entre l'épaisseur maximale et la corde u au pourcentage de hauteur 90% vers le rapport entre l'épaisseur maximale et la corde au pourcentage de hauteur 100%.

Une fonction affine par morceaux est une fonction formée par des sections ou des portions de droites.

Sur la figure 5, les cinq valeurs r,s,t,u et v du rapport entre l'épaisseur maximale et la corde ont été placées sur l'axe des abscisses et en correspondance de ces rapports les différents pourcentages de hauteur associés sont placés sur l'axe des ordonnées.

D'autres lois d'épaisseurs maximales de l'aube en fonction de sa hauteur peuvent être définies à partir de la loi d'épaisseur maximale de l'aube en fonction de sa hauteur telle qu'on vient de la définir.

En particulier la valeur L du rapport entre l'épaisseur maximale et la corde peut être ajoutée ou retranchée aux valeurs du rapport entre l'épaisseur maximale et la corde de la loi d'épaisseur maximale de l'aube en fonction de sa hauteur telle qu'on vient de la définir.

Cela définit deux courbes limites 31 et 32 représentées sur la figure 5 qui sont deux courbes affines par morceaux (courbes formées de portions de droites).

Les courbes 31 et 32 définissent un couloir de demi-largeur L autour de la loi d'épaisseur maximale de l'aube en fonction de sa hauteur telle qu'on vient de la définir.

Le couloir est représenté sous la forme d'une zone hachurée dans la figure 5.

Les valeurs suivantes permettent de définir plus précisément des lois d'épaisseur maximale :
- r peut être compris entre 8% et 18%, de préférence de l'ordre de 13%,
- s peut être compris entre 1% et 7%, de préférence de l'ordre de 4%,
- t peut être compris entre 0,5% et 4,5%, de préférence de l'ordre de 2,5%,
- u peut être compris entre 0,5% et 4,5%, de préférence de l'ordre de 2,5%,
- v peut être compris entre 0,1% et 0,9%, de préférence de l'ordre de 1,5%,
- L peut être compris entre 0,1% et 1,9%, de préférence de l'ordre de 1%,

Tout graphe qui s'inscrit dans le couloir séparant les courbes 31 et 32 sur la figure 5 peut définir une loi d'épaisseur maximale de l'aube en fonction de sa hauteur, en prenant en compte les caractéristiques précédentes.

En particulier, on peut choisir L=1% pour définir une loi d'épaisseur maximale de l'aube en fonction de sa hauteur. Une telle loi correspond à un graphe compris entre :
- une première fonction définie par
   ∘ un premier morceau de droite défini par un rapport entre l'épaisseur maximale et la corde en pied d'aube égal à 12%, et un rapport entre l'épaisseur maximale et la corde à 30% de hauteur de l'aube égal à 3%,
   ∘ un deuxième morceau de droite défini par un rapport entre l'épaisseur maximale et la corde à 30% de hauteur de l'aube égal à 3%, et un rapport entre l'épaisseur maximale et la corde à 70% de hauteur de l'aube égal à 1,5%,
   ∘ un troisième morceau de droite défini par un rapport entre l'épaisseur maximale et la corde à 70% de hauteur de l'aube égal à 1,5%, et un rapport entre l'épaisseur maximale et la corde à 90% de hauteur de l'aube égal à 1,5%,
   ∘ un quatrième morceau de droite défini par un rapport entre l'épaisseur maximale et la corde à 90% de hauteur de l'aube égal à 1,5%, et un rapport entre l'épaisseur maximale et la corde en tête d'aube égal à 0,5% , et
- une deuxième fonction définie par
   ∘ un cinquième morceau de droite défini par un rapport entre l'épaisseur maximale et la corde en pied d'aube égal à 14%, et un rapport entre l'épaisseur maximale et la corde à 30% de hauteur de l'aube égal à 5%,
   ∘ un sixième morceau de droite défini par un rapport entre l'épaisseur maximale et la corde à 30% de hauteur de l'aube égal à 5%, et un rapport entre l'épaisseur maximale et la corde à 70% de hauteur de l'aube égal à 3,5%,
   ∘ un septième morceau de droite défini par un rapport entre l'épaisseur maximale et la corde à 70% de hauteur de l'aube égal à 3,5%, et un rapport entre l'épaisseur maximale et la corde à 90% de hauteur de l'aube égal à 3,5%, et
   ∘ un huitième morceau de droite défini par un rapport entre l'épaisseur maximale et la corde à 90% de hauteur de l'aube égal à 3,5%, et un rapport entre l'épaisseur maximale et la corde en tête d'aube égal à 2,5%.

Plus précisément, le graphe correspondant à la loi d'épaisseur maximale et compris entre les deux fonctions telles qu'on vient de les définir, peut varier selon une fonction affine par morceaux. Le graphe peut également correspondre à un rapport entre l'épaisseur maximale et la corde d'une section d'aube qui diminue et/ou reste constant lorsque la hauteur de la section augmente

### Ligne de fonctionnement d'une soufflante de turbomachine

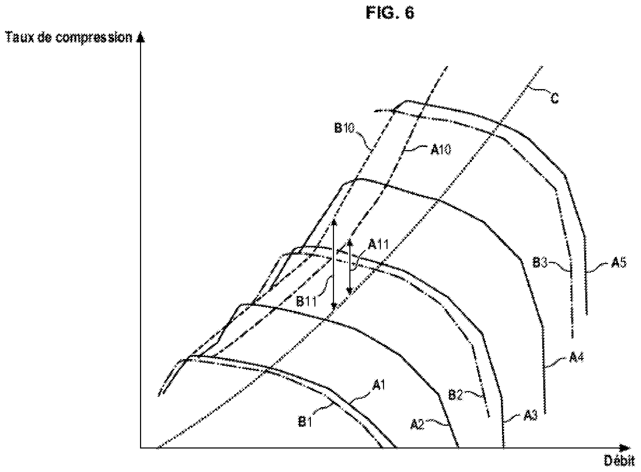

En référence à la figure 6, des lignes de fonctionnement d'une soufflante représentent de manière schématique le taux de compression en fonction du débit.

Les courbes A1, A2, A3, A4 et A5 correspondent à cinq régimes de moteur, c'est à dire cinq vitesses de rotation du moteur, impliquant des aubes et une soufflante selon l'art antérieur. Dans un régime donné, les conditions de vol imposent une position sur la courbe ou un point de fonctionnement du moteur, c'est-à-dire un couple de valeurs débit et taux de compression.

Idéalement, le point de fonctionnement du moteur se situe proche de la courbe C, qui est la courbe de fonctionnement nominal.

La courbe A10 matérialise la frontière de la zone de flottement selon le même art antérieur. Les points de fonctionnement du moteur situés sur les courbes A1, A2, A3, A4 ou A5 et à gauche de la courbe A10 correspondent à un phénomène de flottement important.

La marge au flottement peut être définie comme une distance A11 entre la courbe C et la courbe A10.

La courbe B10 matérialise la frontière de la zone de flottement du moteur correspondant. La marge au flottement peut être définie comme une distance B11 entre la courbe B10 et la courbe C, courbe de fonctionnement nominal.

La distance B11 étant supérieure à la distance A11, la marge au flottement a été augmentée par rapport à l'antérieur.

Des simulations numériques montrent que le respect d'une loi d'épaisseur maximale :
- diminue la valeur du couplage flexion-torsion
- augmente la valeur de la fréquence du premier mode de flexion de l'aube.

La diminution du couplage flexion-torsion et l'augmentation de la fréquence du premier mode de flexion de l'aube ont tendance à diminuer l'effet de flottement et à augmenter la marge au flottement.

Un avantage apporté par l'invention est l'augmentation de la marge au flottement sans que le comportement mécanique de l'aube ou les performances aérodynamiques de l'aube ne soient dégradés.

## Revendications

1. Aube de rotor de turbomachine comprenant une pluralité de sections d'aube empilées selon un axe Z entre un pied d'aube et une tête d'aube définissant entre eux la hauteur de l'aube, chaque section d'aube comportant un bord d'attaque (1), un bord de fuite (2), un intrados (3) et un extrados (4), une corde (25) définie par la longueur de la portion de droite reliant le bord d'attaque (16) et le bord de fuite (17) dans la section considérée et une épaisseur maximale (26) définie par la distance maximale entre l'extrados (3) et l'intrados (4) **caractérisée en ce que** :
- le rapport entre l'épaisseur maximale et la corde à 30% de hauteur de l'aube est compris entre 20% et 42% du rapport entre l'épaisseur maximale et la corde en pied d'aube,
- le rapport entre l'épaisseur maximale et la corde à 70% de hauteur de l'aube est compris entre 10% et 30% du rapport entre l'épaisseur maximale et la corde en pied d'aube,
- le rapport entre l'épaisseur maximale et la corde à 90% de hauteur de l'aube est compris entre 10% et 30% du rapport entre l'épaisseur maximale et la corde en pied d'aube,
- le rapport entre l'épaisseur maximale et la corde en tête d'aube est compris entre 3% et 21% du rapport entre l'épaisseur maximale et la corde en pied d'aube.

2. Aube de rotor de turbomachine selon la revendication 1 dans laquelle le rapport entre l'épaisseur maximale et la corde d'une section de l'aube est compris entre :
- Une première fonction affine par morceaux définie par,
. un premier segment de droite défini par un rapport entre l'épaisseur maximale et la corde en pied d'aube égal à 12%, et un rapport entre l'épaisseur maximale et la corde à 30% de hauteur de l'aube égal à 3%,
. un deuxième segment de droite défini par un rapport entre l'épaisseur maximale et la corde à 30% de hauteur de l'aube égal à 3%, et un rapport entre l'épaisseur maximale et la corde à 70% de hauteur de l'aube égal à 1,5%,
. un troisième segment de droite défini par un rapport entre l'épaisseur maximale et la corde à 70% de hauteur de l'aube égal à 1,5%, et un rapport entre l'épaisseur maximale et la corde à 90% de hauteur de l'aube égal à 1,5%,
. un quatrième segment de droite défini par un rapport entre l'épaisseur maximale et la corde à 90% de hauteur de l'aube égal à 1,5%, et un rapport entre l'épaisseur maximale et la corde en tête d'aube égal à 0,5%, et
- une deuxième fonction affine par morceaux définie par
. un cinquième segment de droite défini par un rapport entre l'épaisseur maximale et la corde en pied d'aube égal à 14%, et un rapport entre l'épaisseur maximale et la corde à 30% de hauteur de l'aube égal à 5%,
. un sixième segment de droite défini par un rapport entre l'épaisseur maximale et la corde à 30% de hauteur de l'aube égal à 5%, et un rapport entre l'épaisseur maximale et la corde à 70% de hauteur de l'aube égal à 3,5%,
. un septième segment de droite défini par un rapport entre l'épaisseur maximale et la corde à 70% de hauteur de l'aube égal à 3,5%, et un rapport entre l'épaisseur maximale et la corde à 90% de hauteur de l'aube égal à 3,5%, et
. un huitième segment de droite défini par un rapport entre l'épaisseur maximale et la corde à 90% de hauteur de l'aube égal à 3,5%, et un rapport entre l'épaisseur maximale et la corde en tête d'aube égal à 2,5%.

3. Aube de rotor de turbomachine selon la revendication 1 ou 2 dans laquelle le rapport entre l'épaisseur maximale et la corde varie en fonction de sa hauteur selon une fonction affine par morceaux du pied à 30% de la hauteur de l'aube, de 30%à 70% de la hauteur d'aube, de 70% à 90% de hauteur de l'aube, et de 90% de hauteur de l'aube de la hauteur de l'aube à la tête d'aube.

4. Aube de rotor de turbomachine selon l'une quelconque des revendications précédentes dans laquelle le rapport entre l'épaisseur maximale et la corde d'une section de l'aube diminue ou reste constant lorsque la hauteur de la section augmente.

5. Aube de rotor de turbomachine selon l'une quelconque des revendications précédentes dans laquelle le rapport entre l'épaisseur maximale et la corde à 30% de hauteur de l'aube est compris entre 26% et 36%, de préférence de l'ordre de 30,8% du rapport entre l'épaisseur maximale et la corde en pied d'aube

6. Aube de rotor de turbomachine selon l'une quelconque des revendications précédentes dans laquelle le rapport entre l'épaisseur maximale et la corde à 70% de hauteur de l'aube est compris entre 14% et 24%, de préférence de l'ordre de 19,2% rapport entre l'épaisseur maximale et la corde en pied d'aube.

7. Aube de rotor de turbomachine selon l'une quelconque des revendications précédentes dans laquelle le rapport entre l'épaisseur maximale et la corde à 90% de hauteur de l'aube est compris entre 14% et 24%, de préférence de l'ordre de 19,2% du rapport entre l'épaisseur maximale et la corde en pied d'aube.

8. Aube de rotor de turbomachine selon l'une quelconque des revendications précédentes dans laquelle le rapport entre l'épaisseur maximale et la corde en tête d'aube est compris entre 6,5% et 16,5%, de préférence de l'ordre de 11,5% du rapport entre l'épaisseur maximale et la corde en pied d'aube.

9. Aube de rotor de turbomachine selon l'une quelconque des revendications précédentes dans laquelle le rapport entre l'épaisseur maximale et la corde en pied d'aube est compris entre 8% et 18%, de préférence de l'ordre de 13%.

10. Soufflante de turbomachine comportant une pluralité d'aubes de rotor selon l'une quelconque des revendications précédentes.

11. Turbomachine **caractérisée en ce qu'**elle comporte une soufflante selon la revendication 10.

## Patentansprüche

1. Rotorschaufel einer Turbomaschine mit einer Vielzahl von Schaufelabschnitten, die entlang einer Z-Achse zwischen einem Schaufelfuß und einem Schaufelkopf, die zwischen sich die Höhe der Schaufel definieren, gestapelt sind, wobei jeder Schaufelabschnitt eine Vorderkante (1), eine Hinterkante (2), eine Unterseite (3) und eine Oberseite (4) aufweist, eine Sehne (25), die durch die Länge des geraden Abschnitts definiert ist, der die Vorderkante (16) und die Hinterkante (17) in dem betreffenden Abschnitt verbindet, und eine maximale Dicke (26), die durch den maximalen Abstand zwischen der Oberseite (3) und der Unterseite (4) definiert ist, **dadurch gekennzeichnet, dass** :
- das Verhältnis zwischen der maximalen Dicke und der Sehne bei 30 % Schaufelhöhe zwischen 20 % und 42 % des Verhältnisses zwischen der maximalen Dicke und der Sehne am Schaufelfuß beträgt,
- das Verhältnis zwischen der maximalen Dicke und der Sehne bei 70% Schaufelhöhe liegt zwischen 10% und 30% des Verhältnisses zwischen der maximalen Dicke und der Sehne am Schaufelfuß,
- das Verhältnis zwischen der maximalen Dicke und der Sehne bei 90% Schaufelhöhe liegt zwischen 10% und 30% des Verhältnisses zwischen der maximalen Dicke und der Sehne am Schaufelfuß,
- das Verhältnis zwischen der maximalen Dicke und der Sehne am Schaufelkopf liegt zwischen 3% und 21% des Verhältnisses zwischen der maximalen Dicke und der Sehne am Schaufelfuß.

2. Rotorschaufel einer Turbomaschine nach Anspruch 1, wobei das Verhältnis zwischen der maximalen Dicke und der Sehne eines Schaufelabschnitts zwischen:
- Eine erste stückweise affine Funktion, definiert durch,
. einem ersten Geradensegment, das durch ein Verhältnis zwischen der maximalen Dicke und der Sehne am Schaufelfuß gleich 12% und ein Verhältnis zwischen der maximalen Dicke und der Sehne bei 30% Schaufelhöhe gleich 3% definiert ist,
. ein zweites Geradensegment, das durch ein Verhältnis zwischen der maximalen Dicke und der Sehne bei 30% Schaufelhöhe gleich 3% und ein Verhältnis zwischen der maximalen Dicke und der Sehne bei 70% Schaufelhöhe gleich 1,5% definiert ist,
. ein drittes gerades Segment, das durch ein Verhältnis zwischen der maximalen Dicke und der Sehne bei 70% Schaufelhöhe gleich 1,5% und ein Verhältnis zwischen der maximalen Dicke und der Sehne bei 90% Schaufelhöhe gleich 1,5% definiert ist,
. ein viertes Geradensegment, das durch ein Verhältnis zwischen der maximalen Dicke und der Sehne bei 90% der Schaufelhöhe gleich 1,5% und ein Verhältnis zwischen der maximalen Dicke und der Sehne am Schaufelkopf gleich 0,5% definiert ist, und
- eine zweite stückweise affine Funktion, die definiert ist durch
. ein fünftes Geradensegment, das durch ein Verhältnis zwischen der maximalen Dicke und der Sehne am Schaufelfuß von 14% und ein Verhältnis zwischen der maximalen Dicke und der Sehne bei 30% Schaufelhöhe von 5% definiert ist,
. ein sechstes Geradensegment, das durch ein Verhältnis zwischen der maximalen Dicke und der Sehne bei 30% Schaufelhöhe gleich 5% und ein Verhältnis zwischen der maximalen Dicke und der Sehne bei 70% Schaufelhöhe gleich 3,5% definiert ist,
. ein siebtes gerades Segment, das durch ein Verhältnis zwischen der maximalen Dicke und der Sehne bei 70% Schaufelhöhe gleich 3,5% und ein Verhältnis zwischen der maximalen Dicke und der Sehne bei 90% Schaufelhöhe gleich 3,5% definiert ist, und
. ein achtes Geradensegment, das durch ein Verhältnis zwischen der maximalen Dicke und der Sehne bei 90% der Schaufelhöhe gleich 3,5% und ein Verhältnis zwischen der maximalen Dicke und der Sehne am Schaufelkopf gleich 2,5% definiert ist.

3. Rotorschaufel einer Turbomaschine nach Anspruch 1 oder 2, bei der sich das Verhältnis zwischen maximaler Dicke und Sehne in Abhängigkeit von ihrer Höhe gemäß einer stückweise affinen Funktion von Fuß bis 30% der Schaufelhöhe, von 30% bis 70% der Schaufelhöhe, von 70% bis 90% der Schaufelhöhe und von 90% der Schaufelhöhe von der Schaufelhöhe bis zum Schaufelkopf ändert.

4. Rotorschaufel einer Turbomaschine nach einem der vorhergehenden Ansprüche, wobei das Verhältnis von maximaler Dicke zu Sehne eines Abschnitts der Schaufel mit zunehmender Höhe des Abschnitts abnimmt oder konstant bleibt.

5. Rotorschaufel einer Turbomaschine nach einem der vorhergehenden Ansprüche, wobei das Verhältnis zwischen der maximalen Dicke und der Sehne bei 30 % Schaufelhöhe zwischen 26 % und 36 % beträgt, vorzugsweise in der Größenordnung von 30,8 % des Verhältnisses zwischen der maximalen Dicke und der Sehne am Schaufelfuß.

6. Rotorschaufel einer Turbomaschine nach einem der vorhergehenden Ansprüche, wobei das Verhältnis zwischen der maximalen Dicke und der Sehne bei 70% der Schaufelhöhe zwischen 14% und 24% liegt, vorzugsweise in der Größenordnung von 19,2% des Verhältnisses zwischen der maximalen Dicke und der Sehne am Schaufelfuß.

7. Rotorschaufel einer Turbomaschine nach einem der vorhergehenden Ansprüche, wobei das Verhältnis zwischen der maximalen Dicke und der Sehne bei 90% der Schaufelhöhe zwischen 14% und 24% liegt, vorzugsweise in der Größenordnung von 19,2% des Verhältnisses zwischen der maximalen Dicke und der Sehne am Schaufelfuß.

8. Rotorschaufel einer Turbomaschine nach einem der vorhergehenden Ansprüche, bei der das Verhältnis zwischen der maximalen Dicke und der Sehne am Schaufelkopf zwischen 6,5% und 16,5% liegt, vorzugsweise in der Größenordnung von 11,5% des Verhältnisses zwischen der maximalen Dicke und der Sehne am Schaufelfuß.

9. Rotorschaufel einer Turbomaschine nach einem der vorhergehenden Ansprüche, wobei das Verhältnis zwischen der maximalen Dicke und der Sehne am Schaufelfuß zwischen 8 % und 18 %, vorzugsweise in der Größenordnung von 13 %, liegt.

10. Gebläse für Turbomaschine mit einer Vielzahl von Rotorschaufeln nach einem der vorhergehenden Ansprüche.

11. Turbomaschine, **dadurch gekennzeichnet, dass** sie ein Gebläse nach Anspruch 10 aufweist.

## Claims

1. Turbomachine rotor blade comprising a plurality of blade sections stacked along a Z axis between a blade root and a blade tip defining between them the height of the blade, each blade section comprising a leading edge (1), a trailing edge (2), a pressure face (3) and a suction face (4), a chord (25) defined by the length of the straight portion connecting the leading edge (16) and the trailing edge (17) in the section and a maximum thickness (26) defined by the maximum distance between the upper surface (3) and the lower surface (4), **characterized in that** :
- the ratio between the maximum thickness and the chord at 30% blade height is between 20% and 42% of the ratio between the maximum thickness and the chord at the blade root,
- the ratio between the maximum thickness and the chord at 70% of the blade height is between 10% and 30% of the ratio between the maximum thickness and the chord at the blade root,
- the ratio between the maximum thickness and the chord at 90% of the blade height is between 10% and 30% of the ratio between the maximum thickness and the chord at the blade root,
- the ratio between the maximum thickness and the chord at the blade tip is between 3% and 21% of the ratio between the maximum thickness and the chord at the blade root.

2. The turbomachine rotor blade of claim 1 wherein the ratio of maximum thickness to chord of a section of the blade is between:
- A first piecewise affine function defined by,
. a first line segment defined by a ratio between the maximum thickness and the chord at the blade root equal to 12%, and a ratio between the maximum thickness and the chord at 30% of the blade height equal to 3%,
. a second straight line segment defined by a ratio between the maximum thickness and the chord at 30% blade height equal to 3%, and a ratio between the maximum thickness and the chord at 70% blade height equal to 1.5%,
. a third straight line segment defined by a ratio between the maximum thickness and the 70% blade height chord equal to 1.5%, and a ratio between the maximum thickness and the 90% blade height chord equal to 1.5%,
. a fourth line segment defined by a ratio between the maximum thickness and the chord at 90% of the blade height equal to 1.5%, and a ratio between the maximum thickness and the chord at the blade head equal to 0.5%, and
- a second piecewise affine function defined by
. a fifth line segment defined by a ratio between the maximum thickness and the chord at the blade root equal to 14%, and a ratio between the maximum thickness and the chord at 30% of blade height equal to 5%,
. a sixth straight line segment defined by a ratio between the maximum thickness and the chord at 30% blade height equal to 5%, and a ratio between the maximum thickness and the chord at 70% blade height equal to 3.5%,
. a seventh line segment defined by a ratio of maximum thickness to 70% blade height chord equal to 3.5%, and a ratio of maximum thickness to 90% blade height chord equal to 3.5%, and
. an eighth line segment defined by a ratio of maximum thickness to 90% blade height chord equal to 3.5%, and a ratio of maximum thickness to blade head chord equal to 2.5%.

3. The turbomachine rotor blade of claim 1 or 2 wherein the ratio of maximum thickness to chord varies as a function of blade height according to a piecewise affine function from the blade root to 30% blade height, from 30% to 70% blade height, from 70% to 90% blade height, and from 90% blade height to the blade tip.

4. The turbomachine rotor blade of any of the preceding claims wherein the ratio of maximum thickness to chord of a section of the blade decreases or remains constant as the height of the section increases.

5. Turbomachine rotor blade according to any one of the preceding claims in which the ratio between the maximum thickness and the chord at 30% blade height is between 26% and 36%, preferably of the order of 30.8% of the ratio between the maximum thickness and the chord at the blade root

6. Turbomachine rotor blade according to any one of the preceding claims in which the ratio between the maximum thickness and the chord at 70% blade height is between 14% and 24%, preferably of the order of 19.2% ratio between the maximum thickness and the chord at the blade root.

7. A turbomachine rotor blade according to any one of the preceding claims wherein the ratio between the maximum thickness and the chord at 90% blade height is between 14% and 24%, preferably of the order of 19.2% of the ratio between the maximum thickness and the chord at the blade root.

8. A turbomachine rotor blade according to any one of the preceding claims wherein the ratio between the maximum thickness and the chord at the blade tip is between 6.5% and 16.5%, preferably about 11.5% of the ratio between the maximum thickness and the chord at the blade root.

9. A turbomachine rotor blade according to any one of the preceding claims wherein the ratio between the maximum thickness and the chord at the blade root is between 8% and 18%, preferably of the order of 13%.

10. A turbomachine fan comprising a plurality of rotor blades according to any one of the preceding claims.

11. A turbomachine **characterized in that** it comprises a fan according to claim 10.
